# EUROPEAN PATENT SPECIFICATION

(11) **EP 2 609 163 B1**
(45) Date of publication and mention of the grant of the patent: **11.12.2013**
(21) Application number: 11776837.4
(22) Date of filing: 26.08.2011
(51) Int. Cl.: C09D 179/04

(54) **LUSTROUS ELECTROMAGNETIC WAVE TRANSMISSIVE COATING FILM, ELECTROMAGNETIC WAVE TRANSMISSIVE COATING MATERIAL COMPOSITION FOR FORMING THIS FILM, AND METHOD OF FORMING ELECTROMAGNETIC WAVE TRANSMISSIVE COATING FILM THEREWITH**
GLÄNZENDE, FÜR ELEKTROMAGNETISCHE WELLEN DURCHLÄSSIGE BESCHICHTUNGSFOLIE, FÜR ELEKTROMAGNETISCHE WELLEN DURCHLÄSSIGE BESCHICHTUNGSMATERIALZUSAMMENSETZUNG ZUR HERSTELLUNG DIESER FOLIE UND VERFAHREN ZUR HERSTELLUNG DER FÜR ELEKTROMAGNETISCHE WELLEN DURCHLÄSSIGEN BESCHICHTUNGSFOLIE DAMIT
PELLICULE PROTECTRICE BRILLANTE TRANSMETTANT LES ONDES ÉLECTROMAGNÉTIQUES, COMPOSITION DU MATÉRIAU PROTECTEUR TRANSMETTANT LES ONDES ÉLECTROMAGNÉTIQUES POUR FORMER CETTE PELLICULE ET PROCÉDÉ DE FORMATION DE LA PELLICULE PROTECTRICE TRANSMETTANT LES ONDES ÉLECTROMAGNÉTIQUES AVEC CELLE-CI

(30) Priority: 27.08.2010 JP 2010190921
(43) Date of publication of application: 03.07.2013
(73) Proprietor: Toyota Jidosha Kabushiki Kaisha, Toyota-shi, Aichi-ken 471-8571 (JP)
(72) Inventor: YANAGIMOTO, Hiroshi, Toyota-shi Aichi-ken 471-8571 (JP); IMAMURA, Tsuyoshi, Neyagawa-shi Osaka 572-8501 (JP); ISHIBASHI, Hideo, Neyagawa-shi Osaka 572-8501 (JP); IWAKOSHI, Ayako, Neyagawa-shi Osaka 572-8501 (JP)
(74) Representative: Intès, Didier Gérard André
(86) International application number: PCT/IB2011/001952
(87) International publication number: WO 2012/025822

(56) References cited:
- JP-A- 11 179 836
- US-A1- 2006 057 363
- US-A1- 2009 035 476

## Description

### 1. Field of the Invention

The invention relates to a lustrous electromagnetic wave transmissive coating film, an electromagnetic wave transmissive coating material composition for forming this film, and a method of forming the electromagnetic wave transmissive coating film therewith. In more detail, the invention relates to an electromagnetic wave transmissive coating film that has the electromagnetic wave transmittance, adhesiveness, lustrous appearance, and is excellent in balance therebetween; an electromagnetic wave transmissive coating material composition for forming this film; and a method of forming the electromagnetic wave transmissive coating film therewith.

### 2. Description of Related Art

In recent years, in appearance of automobile bodies, automobile parts such as aluminum wheels, and electrical appliances such as portable telephones and personal computers, high design flexibilities are in demand. That is, a technology capable of giving metallic luster like a mirror surface to a surface is important. With regard to technologies like this, metal plating and metal vapor deposition are available. However, the metal plating, while it can impart an appearance having excellent design flexibility, had disadvantages that environmental load of waste water is large, and substrates are limited to conductive materials. The metal vapor deposition, since the substrate has to be placed in a vacuum or reduced pressure vessel, could not be applied to large substrates. Further, both of the metal plating and metal vapor deposition methods necessitated huge apparatuses.

With regard to the metal vapor deposition, for example, Japanese Patent No. 3366299 discloses a plastics coating part that is inserted in particular in a front grill of an automobile and vapor deposited with a thin metal layer made of indium and the like (Japanese Patent No. 3366299: Claim 1). In addition, in Japanese Patent No. 3597075, a method of forming a radar radome having a special structure that is an automobile part, which includes forming a metal layer by vapor deposition or sputtering is described (Japanese Patent No. 3597075: Claim 1 and paragraph Nos. 0013 to 0014). Here, the literature relates to a method of forming a metal layer having the radar transmittance, which does not disturb a function of automobile part such as a radar distance measurement device. However, methods of forming a discontinuous metal particle layer by physical vapor deposition such as sputtering, which are disclosed in Japanese Patent Nos. 3366299 and 3597075, necessitate a strict thickness control; accordingly, in some cases, the productivity is deteriorated. Further, in an insulating resinous substrate having a complicated shape, a thickness dispersion occurs; accordingly, in some cases, a product shape to be a target was limited. Further, when a coating material where micrometer or millimeter order metal powder is dispersed is coated on an insulating resinous substrate, because of lack in the smoothness of the resulted coating film, a lustrous appearance cannot be obtained. Still furthermore, as a magnitude of a metal particle becomes larger, a sealing property of the electromagnetic wave is recognized to be higher; accordingly, the resulted coating film cannot be applied to a radar distance measurement device.

In order to avoid defects of the metal plating and metal vapor deposition like this, recently, a technology that imparts the metallic luster by coating has been developed.

In, for example, Japanese Patent No. 4330620, a method of forming a lustrous coating film, which uses a lustrous base coating material that contains a precious metal or copper colloid particles solution containing precious metal or copper colloid particles dispersed by use of a polymer pigment dispersant, and a vehicle, is described (Japanese Patent No. 4330620: Claim 1). Here, in Japanese Patent No. 4330620, a detailed description of a solvent used in the lustrous coating material is not found. However, examples include toluene/xylene/butyl acetate/ethyl acetate, and, as a target of the solvent swelling rate measurement of an undercoat film, toluene is used; accordingly, the lustrous coating material is considered to contain as a solvent an aromatic hydrocarbon such as toluene.

Japanese Patent Application Publication No. 2009-28690 (JP-A-2009-28690) describes a method of forming a multilayer coating film containing a lustrous material-containing base coating film formed with a lustrous material-containing base coating material containing precious metal and/or metal-containing colloid particles, a coating film forming resin, and a mixed solvent containing, at a particular weight mixing ratio, a particular ester organic solvent and a particular glycol or glycol ether organic solvent (JP-A-2009-28690: Claim 1), and the ester solvent is described as an indispensable component of the lustrous material-containing base coating material. Furthermore, Japanese Patent Application Publication No. 2009-28692 (JP-A-2009-28692) describes a method of forming a multilayer coating film containing a lustrous material-containing base coating film formed with a lustrous material-containing base coating material containing precious metal and/or metal-containing colloid particles, and a coating film forming resin (JP-A-2009-28692: Claim 1), and, in examples, the ester solvent is preferably used.

However, like the coating materials described in Japanese Patent No. 4330620, and JP-A-2009-28690 and JP-A-2009-28692, when the aromatic hydrocarbon such as toluene or the ester solvent is used as a solvent, depending on a material of a substrate to be coated, dissolution or erosion may occur. In particular, when an object to be coated is a substrate made of plastics such as an acrylic resin or a polycarbonate resin, the solvent resistance to an aromatic hydrocarbon such as toluene, an ester solvent such as butyl acetate or γ-butylolactone, or ketone organic solvent such as acetone becomes insufficient, a flat coating film is difficult to be obtained, and metallic design may not be obtained. Furthermore, Japanese Patent No. 4330620, and JP-A-2009-28690 and JP-A-2009-28692 do not at all describe about the electromagnetic wave transmittance.

Still furthermore, with regard to a metal film having conductivity and/or adhesiveness, technologies below have been developed.

Japanese Patent Application Publication No. 2003-103158 (JP-A-2003-103158) describes a high concentration metal colloid solution, and further describes that in the case where the metal colloid solution is used, even when a heating temperature is decreased and/or a heating time period is shortened, a metal film substantially having conductivity can be obtained.

Japanese Patent Application Publication No. 2008-7849 (JP-A-2008-7849) describes a primer composition for electroless plating, which contains metal colloid particles, a particular curable composition, and a solvent. According to JP-A-2008-7849, it is said that, by use of the primer composition, on a nonconductive substrate having a smooth surface, without deteriorating the smoothness, a plating film excellent in the adhesiveness with the substrate can be formed. Furthermore, an oxazoline group-containing compound used in the curable composition is used to improve the adhesiveness. However, an effect on the lustrous appearance of the oxazoline group-containing compound is not at all described.

Japanese Patent Application Publication No. 2008-294160 (JP-A-2008-294160) describes an ink for conductive pattern, which contains nano-particles made of an alloy made of silver and bismuth. According to JP-A-2008-294160, when the ink for conductive pattern is used, a conductive pattern having a low resistance value can be formed by heating at a low temperature. Furthermore, by means of the heat treatment, a conductive pattern excellent in the adhesiveness with a glass substrate, a ceramic substrate or a metal substrate can be formed.

Japanese Patent Application Publication No. 2008-150654 (JP-A-2008-150654) describes a metal substrate for surface treatment, which includes an iron substrate and a particular bismuth metal nano-particles. According to JP-A-2008-150654, a metal substrate for surface treatment obtained by use of a cationic electrodeposition coating material composition that contains the bismuth metal nano-particles, because of specific antirust effect of the bismuth metal nano-particles, has excellent corrosive resistance, and can inhibit a film from peeling.

However, the conductive coating film obtained by use of the metal colloid or metal nano-particles is generally considered to not have electromagnetic wave transmittance, and JP-A-2003-103158, JP-A-2008-7489, JP-A-2008-294160 and JP-A-2008-150654 do not at all describe the electromagnetic wave transmittance.

As described above, coating materials of the related art are, in electromagnetic wave transmittance, adhesiveness, and highly lustrous appearance of metal coating films obtained by use thereof, insufficient from the viewpoint of economic efficiency, convenience of coating, and quality of coating film. Further, an electromagnetic wave transmissive coating film having the electromagnetic wave transmittance, adhesiveness, lustrous appearance, and excellent balance therebetween has not yet been found.

### SUMMARY OF THE INVENTION

The invention is directed to: an electromagnetic wave transmissive coating film having the electromagnetic wave transmittance, adhesiveness, highly lustrous appearance, and excellent balance therebetween; an electromagnetic wave transmissive coating material composition for forming the same; and a method of forming the electromagnetic wave transmissive coating film therewith.

A first aspect of the invention relates to a lustrous electromagnetic wave transmissive coating film containing metal nano-particles and a resin component. The electromagnetic wave transmissive coating film includes metal nano-particles containing one or more kinds of metals, and a resin component containing a first resin containing an oxazoline group and a second resin containing a carboxyl group, in the resin, component the carboxyl group derived from the second resin being present in a molar ratio of 0.7 to 50 times the oxazoline group derived from the first resin; wherein the resin component is soluble in ethanol, or, when water is added to a diethylene glycol diethyl ether solution obtained by dissolving 0.5 g of the resin component in 10 ml of diethylene glycol diethyl ether, an addition amount of the water until the diethylene glycol diethyl ether solution becomes turbid is 1.5 ml or more.

In the first aspect, the metal may be silver or gold. In the first aspect, the first resin may contain 5 mmol/g-solid or more of the oxazoline group.

A second aspect of the invention relates to a method of forming a lustrous electromagnetic wave transmissive coating film. The method of forming an electromagnetic wave transmissive coating film includes coating a substrate with an electromagnetic wave transmissive coating material composition containing metal nano-particles containing one or more kinds of metals, a resin component, and a solvent, wherein the resin component is soluble in ethanol, or, when water is added to a diethylene glycol diethyl ether solution obtained by dissolving 0.5 g of the resin component in 10 ml of diethylene glycol diethyl ether, an addition amount (ml) of the water until the diethylene glycol diethyl ether solution becomes turbid is 1.5 ml or more, and, the resin component contains a first resin containing the oxazoline group and a second resin containing the carboxyl group, wherein in the resin component the carboxyl group derived from the second resin being present in a molar ratio of 0.7 to 50 times the oxazoline group derived from the first resin.

In the second aspect, after coating, drying by heating and/or energy beam irradiation may be applied. In the second aspect, the substrate may be a plastic material. In the second aspect, the substrate may be transparent. In the second aspect, the coating may be a spin coat-coating method. In the second aspect, the coating may be a spray coating method. In the second aspect, the coating may be an ink-jet printing method.

A third aspect of the invention relates to an electromagnetic wave transmissive coating material composition for forming a lustrous electromagnetic wave transmissive coating film. The electromagnetic wave transmissive coating material composition includes metal nano-particles containing one or more kinds of metals, a resin component containing a first resin containing an oxazoline group and a second resin containing a carboxyl group, wherein in the resin components the carboxyl group derived from the second resin is present in a molar ratio of 0.7 to 50 times the oxazoline group derived from the first resin, wherein the resin component is soluble in ethanol, or, when water is added to a diethylene glycol diethyl ether solution obtained by dissolving 0.5 g of the resin component in 10 ml of diethylene glycol diethyl ether, an addition amount (ml) of the water until the diethylene glycol diethyl ether solution becomes turbid is 1.5 ml or more. In the third aspect, the metal may be silver or gold. In the third aspect, the first resin may contain 5 mmol/g-solid or more of the oxazoline group.

In the third aspect, the solvent may contain alkylene glycol monoalkyl ethers represented by a formula of R-(O-R')n-OH, herein R represents an alkyl group, R' represents an alkylene group, and n represents an integer of 1 to 4, in an amount of 50% by weight or more. In the third aspect, the solvent may contain a solvent of which surface tension at 25°C is 33 mN/m or more in an amount of 5% by weight or less. In the third aspect, the solvent may contain a solvent of which surface tension at 25°C is 45 mN/m or more in an amount of 5% by weight or less

A lustrous electromagnetic wave transmissive coating film of the invention has the electromagnetic wave transmittance, adhesiveness, and highly lustrous appearance, and is excellent in balance therebetween.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:

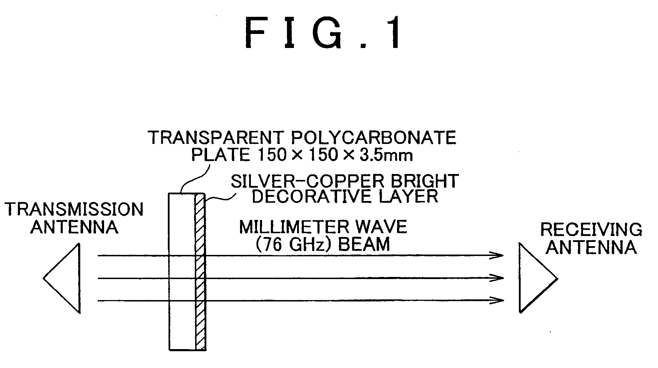

FIG. 1 is a diagram illustrating a measurement method of the electromagnetic wave transmission loss.

### DETAILED DESCRIPTION OF EMBODIMENTS

A lustrous electromagnetic wave transmissive coating film of the exemplary embodiment contains particular metal nano-particles and a particular resin component. The lustrous electromagnetic wave transmissive coating film of the exemplary embodiment has excellent highly lustrous appearance (metallic design) because it has sufficient smoothness, and electromagnetic wave transmittance and excellent adhesiveness. Furthermore, an electromagnetic wave transmissive coating material composition of the exemplary embodiment contains particular metal nano-particles, a particular resin component, and a particular solvent.

The metal nano-particles used in a coating film or a composition of the exemplary embodiment contain one kind or more kinds of metals. Examples of the metal nano-particles include, without particularly restricting, gold, silver, ruthenium, rhodium, palladium, osmium, iridium, and platinum. Gold, silver, platinum and palladium may be used preferably. From the viewpoint of high luster, silver or gold may be used more preferably. Furthermore, examples of base metals other than the above metals include copper, nickel, bismuth, indium, cobalt, zinc, tungsten, chromium, iron, molybdenum, tantalum, manganese, tin and titanium.

As the metal nano-particles used in the coating film or composition of the exemplary embodiment, at least two kinds of the metals and/or base metals cited above may be used by compositing (composite nano-particles) or by simply mixing (mixed nano-particles). Examples of the composite nano-particles include composite nano-particles having a core-shell structure. In the composite nano-particles, the nano-particle is made of two or more kinds of metals, and in the mixed nano-particles, two or more kinds of nano-particles are mixed. In the composite nano-particles or mixed nano-particles, when the metal and base metal are used, in order to synthesize the composite nano-particles or mixed nano-particles, a ratio of the metal in the composite nano-particles or mixed nano-particles preferably may be 90 to 100% by weight and more preferably may be 95 to 100% by weight.

The metal nano-particles have a particle size of about 1 to 100 nm, and the nano-particles can be obtained according to a conventional method such as a liquid phase method or a vapor phase method. For example, according to a manufacturing step where, in a solution, a metal compound is reduced under presence of a polymer pigment dispersant, thereby, metal nano-particles are obtained, and an enrichment step where a solution of the metal nano-particles obtained by the manufacturing step is treated by ultrafiltration, the metal nano-particles used in the exemplary embodiment can be obtained. The particle size of the metal nano-particles is an average value of particle sizes obtained by arbitrarily selecting 10 metal nano-particles from a photograph taken with a transmission electron microscope (trade name: JEM-2000, manufactured by JEOL Ltd.) and by measuring by use of a vernier caliper.

Examples of compounds of the metals used to prepare the metal nano-particles are not particularly restricted as long as these contain the metals, and include tetrachloroauric (III) acid tetrahydrate (chlorauric acid), silver nitrate, bismuth (III) nitrate, silver acetate, silver (IV) perchlorate, hexachloroplatinic (IV) acid hexahydrate (chloroplatinic acid), potassium chloroplatinate, copper (II) chloride dihydrate, copper (II) acetate monohydrate, copper (II) sulfate, palladium (II) chloride dihydrate, and rhodium (III) trichloride trihydrate. These may be used singularly or in a combination of two or more kinds.

In the method of preparing the metal nano-particles, the compounds of the metals may be used so that a mole concentration of the metal in a solution before the ultrafiltration may be 0.01 mol/L or more. When the mole concentration is less than 0.01 mol/L, a mol concentration of metal in the obtained nano-particles solution of the metal is too low, so it is inefficient. From the above viewpoint, the mol concentration is preferably 0.05 mol/L or more, and, more preferably, 0.1 mol/L or more.

A solvent used in the method of preparing the metal nano-particles is not particularly restricted as long as it can dissolve the metal compound. Examples of the solvents include water and organic solvents. Examples of the organic solvents include, without particularly restricting, alcohols having 1 to 4 carbon atoms such as ethanol or ethylene glycol, ketones such as acetone, and esters such as ethyl acetate. The solvents can be used singularly or in a combination of two or more kinds. When the solvent is a mixture of water and an organic solvent, as the organic solvents, the organic solvents soluble in water such as acetone, methanol, ethanol, ethylene glycol may be used. In the exemplary embodiment, from the viewpoint of being appropriate for a method for partially removing a polymer pigment dispersant such as the ultrafiltration performed later, water, alcohols and a mixed solution of water and alcohol may be used.

In the reduction of the compound of the metal in the method of preparing the metal nano-particles, amine may be used as a reducing agent. For example, when amine is added in, and stirred and mixed with a solution of the compound of the metal and the polymer pigment dispersant, metal ions are reduced to metal around room temperature. By use of the amine, without using a reducing agent high in risk and harmfulness, further, without heating or using a particular light irradiation device, the compound of the metal can be reduced at a reaction temperature of about 5 to 100°C or about 20 to 80°C.

The amine is not particularly restricted, and, for example, amines illustrated in Japanese Patent Application Publication No. 11-80647 (JP-A-11-80647) can be used. Specific examples thereof include aliphatic amines such as propylamine, butylamine, hexylamine, diethylamine, dipropylamine, dimethylethylamine, diethylmethylamine, triethylamine, ethylenediamine, N,N,N',N'-tetramethylethylenediamine, 1,3-diaminopropane, N, N, N', N'-tetramethyl-1,3-diaminopropane, triethylenetetramine, and tetraethylenepentamine; alicyclic amines such as piperidine, N-methylpiperidine, piperadine, N, N'-dimethylpiperadine, pyrrolidine, N-methylpyrrolidine, and morpholine; aromatic amines such as aniline, N-methylaniline, N, N-dimethylaniline, toluidine, anisidine, and phenetidine; aralkylamines such as benzylamine, N-methylbenzylamine, N, N-dimethylbenzylamine, phenetylamine, xylylenediamine, and N, N, N', N'-tetramethylxylylenediamine. Furthermore, examples of the amines further include alkanolamines such as methylaminoethanol, 2-dimethylaminoethanol, triethanolamine, ethanolamine, diethanolamine, methyldiethanolamine, propanolamine, 2-(3-aminopropylamino)ethanol, buthanolamine, hexanolamine, and dimethylaminopropanol. These may be used singularly or in a combination of two or more kinds thereof. Among these, preferably, alkanolamines may be used, and more preferably, 2-dimethylaminoethanol may be used.

Examples of reducing agents other than the above-mentioned amines include alkali metal borohydride such as sodium borohydride, hydrazine compounds, hydroxylamine, citric acid, tartaric acid, ascorbic acid, formic acid, formaldehyde, dithionite, and sulfoxylate derivatives. Among these, because of easy availability, citric acid, tartaric acid, and ascorbic acid may be used preferably. These may be used singularly or in a combination with the amine. However, when amine and citric acid, tartaric acid or ascorbic acid are combined, each of citric acid, tartaric acid or ascorbic acid may be used in a form of salt thereof. Furthermore, when citric acid or a sulfoxylate derivative and iron (II) ions are used in combination thereof, its reducing capability can be improved.

An addition amount of the reducing compound may be equal to or more than an amount necessary to reduce the metal in the compound of the metal. When an amount thereof is less than this amount, the reduction may be insufficient. Further, although the upper limit thereof is not particularly specified, 30 times or less an amount necessary to reduce the metal in the compound of the metal may be used, and preferably 10 times or less may be used. Still furthermore, other than methods of chemically reducing by adding these reducing compounds, a method of illuminating light with a high pressure mercury lamp can be used.

The method of adding the reducing compound is not particularly restricted. For example, the reducing compound can be added after addition of the polymer pigment dispersant. In this case, for example, in a solvent, the polymer pigment dispersant is firstly dissolved, and, therein, either one of the reducing compound or the compound of the metal is dissolved. In a solution thus obtained, remaining one of the reducing compound and the compound of the metal is added, thereby the reduction can be forwarded. Furthermore, as a method of adding the reducing compound, a form where the polymer pigment dispersant and the reducing compound are mixed in advance, and the mixture is added to a solution of the compound of the metal may be taken.

When the solution of nano-particles of the metal obtained according to the reduction is ultrafiltrated, a dispersion of the metal nano-particles high in concentration and less in impurity (miscellaneous ions, salts, amines and the polymer pigment dispersant), which is appropriate for preparation of a coating material composition of the exemplary embodiment can be obtained. A content of the metal in a solid content of the solution after the treatment may be 83% by weight or more and less than 99% by weight, preferably 90% by weight or more and less than 98% by weight, and more preferably 93% by weight or more and less than 98% by weight. When a coating material composition of the exemplary embodiment is prepared by use of the solution of less than 83% by weight, luster when a heating condition during coating film formation is softened may be damaged. Furthermore, when the content is 99% by weight or more, the dispersion stability of the nano-particles may be damaged.

The metal nano-particles used in a coating film or a composition of the exemplary embodiment may be contained in an electromagnetic wave transmissive coating material composition in an amount of 1 to 96% by weight, and preferably in an amount of 2 to 8% by weight. Further, the metal nano-particles used in a coating film or a composition of the exemplary embodiment may be contained in an electromagnetic wave transmissive coating film formed with the electromagnetic wave transmissive coating material composition in an amount of 60 to 96% by weight and preferably in an amount of 5 to 20% by weight.

The resin component used in a coating film or a composition of the exemplary embodiment is necessary to be soluble in ethanol, or satisfy a formula (1):

X ≥ 1.5 Formula (1)

[In the formula, X represents an addition amount (ml) of water when the water is added to a diethylene glycol diethyl ether solution obtained by dissolving 0.5 g of the resin component in 10 ml of diethylene glycol diethyl ether, until the diethylene glycol diethyl ether solution becomes turbid]. The X may be 1.5 to 20 and may be 1.5 to 10. In order for the resin component to have affinity with a surface of the metal nano-particles or a solvent, from the viewpoint of the polarity, the resin component is necessary to be soluble in ethanol or to satisfy the formula (1). In the present specification, whether being dissolved or being turbid is determined based on a numerical value obtained at 23°C by an integrating sphere photoelectric photometry with NDH2000 (trade name, turbidity meter manufactured by NIPPON DENSHOKU INDUSTRIES Co., Ltd.). Specifically, a measurement was conducted after thorough mixing for 5 minutes, and, when the obtained value of diffuse transmittance was 0 to 10, it was determined dissolved, and when the value thereof was more than 10 and 100 or less, it was determined turbid

Further, the resin component used in a coating film or a composition of the exemplary embodiment contains a first resin containing oxazoline groups and a second resin containing carboxyl groups. In the resin components, in order to obtain, while securing the adhesiveness, a coating film having brilliance, the first resin and the second resin are necessary to be mixed so that the carboxyl groups derived from the second resin may be, by mole ratio, 0.03 to 50 times the oxazoline groups derived from the first resin. Preferably, the first resin and the second resin are mixed so that the carboxyl groups derived from the second resin may be, by mole ratio, 0.5 to 1.5 times the oxazoline groups derived from the first resin, and more preferably may be 0.7 to 1.5 times.

Examples of the first resins containing the oxazoline groups include polymers containing oxazoline groups. The polymer containing the oxazoline groups can be readily obtained by singularly polymerizing a compound containing addition polymerizable oxazoline groups, or by copolymerizing the compound containing addition polymerizable oxazoline groups with other monomer copolymerizable therewith.

Examples of the compounds containing the addition polymerizable oxazoline groups include, without particularly restricting, 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline. Among these, 2-isopropenyl-2-oxazoline may be used preferably because it is industrially readily available and excellent in the reactivity or polymerizability with other monomer.

The other monomer is a monomer that does not react with an oxazoline group and is not particularly restricted as long as the monomer contains a functional group other than the oxazoline group. For example, (meth)acrylic acid ester and styrene can be cited. Furthermore, as the other monomer, also an unsaturated compound containing hydroxyl groups can be used. The compounds containing the addition polymerizable oxazoline groups and the other monomers may be used singularly or in a combination of two or more kinds thereof.

A method of manufacturing the polymer containing oxazoline groups, that is, a reaction method of the compound containing addition polymerizable oxazoline groups and the other monomer is not particularly restricted, and conventional various methods can be used.

As the polymer containing oxazoline groups, commercially available products can be preferably used. Examples of the polymers containing oxazoline groups, which are soluble in ethanol, include EPOCROS WS-500, EPOCROS WS-700, and EPOCROS WS-300 (trade name, manufactured by Nippon Shokubai Co., Ltd.). These may be used singularly or in a combination of two or more kinds thereof.

The first resin containing oxazoline groups may contain, from the viewpoint of reactivity, the oxazoline groups preferably in an amount of 5 mmol/g-solid or more, and more preferably in an amount of 5 to 10.3 mmol/g-solid. As the polymer containing oxazoline groups like this, EPOCROS WS-300 can be cited.

As the second resins containing carboxyl groups, polymer pigment dispersants containing carboxyl groups can be cited. These are amphiphilic high molecular weight copolymer containing functional groups high in affinity with the nano-particles and a portion having solvent affinity, and usually used as a pigment dispersant during manufacture of a pigment paste. The polymer pigment dispersant is coexistent with the nano-particles of the metal, and is considered to work to stabilize for the nano-particles of the metal to disperse in a solvent. The number average molecular weight of the polymer pigment dispersant may be 1,000 to 1,000,000. When the number average molecular weight is less than 1,000, the dispersion stability may be insufficient, and when it exceeds 1,000,000, in some cases, the viscosity becomes excessively high to result in difficult handling. From the above viewpoint, the number average molecular weight may be preferably 2,000 to 500,000, and more preferably 2,500 to 500,000. The number average molecular weight is a value obtained by calculating a measurement by gel permeation chromatography (GPC) in terms of polystyrene reference.

As the polymer pigment dispersant containing carboxyl groups, commercially available products can be preferably used. Examples of the polymer pigment dispersants containing carboxyl groups, which are soluble in ethanol, include DISPER BIG 190, DISPER BIG 191, DISPER BIG 180 and DISPER BIG 200 (trade name, all manufactured by BYK Japan K. K.), FLOWLEN G-700 (trade name, manufactured by Kyoeisha Chemical Co., Ltd.), AJISPER PA111 (trade name, manufactured by Ajinomoto Co., Ltd.). These may be used singularly or in a combination of two or more kinds thereof.

As the second resin containing carboxyl groups, coating film forming resins containing carboxyl groups can be cited. Examples of the coating film forming resins containing carboxyl groups, which are soluble in ethanol, include general resins such as acrylic resins, polyester resins, epoxy resins, and urethane resins. These may be used singularly or in a combination of two or more kinds thereof.

Furthermore, the coating film or the composition of the exemplary embodiment may contain, as the resin component, a resin component other than the first resin and second resin, for example, polymer pigment dispersants illustrated below. The polymer pigment dispersant is not particularly restricted as long as the second resin is a polymer pigment dispersant containing carboxyl groups and has the above-mentioned number average molecular weight. Furthermore, commercially available products can be used. Examples of the polymer pigment dispersants soluble in ethanol include SOLSPERSE 20000, SOLSPERSE 27000, and SOLSPERSE 54000 (trade name, all manufactured by LUBRIZOL ADVANCED MATERIAL), DISPER BIG 183, DISPER BIG 184, and DISPER BIG 192 (trade name, all manufactured by BYK Japan K. K.), EFKA-4540 and EFKA-4550 (trade name, all manufactured by EFKA Additives). Examples of the polymer pigment dispersants satisfying the formula (1) include SOLSPERSE 32500, DISPER BIG 163, and DISPER BIG 164. These may be used singularly or in a combination of two or more kinds thereof.

A use amount of the polymer pigment dispersant in the method of preparing metal nano-particles may be 30% by weight or less relative to a total amount of the metal in the metal compound and the polymer pigment dispersant. When the use amount exceeds 30% by weight, even when the ultrafiltration is conducted in the following enrichment step, a concentration of the metal in the solid content in the solution may not be increased to a desired concentration. From the above viewpoint, a use amount of the polymer pigment dispersant may be 20% by weight or less relative to a total amount of the metal in the metal compound and the polymer pigment dispersant, and preferably may be 10% by weight or less.

The resin component used in the coating film or composition of the exemplary embodiment may be contained in the electromagnetic wave transmissive coating material composition in an amount of 0.01 to 10% by weight, and preferably in an amount of 0.1 to 3% by weight. In addition, the resin component used in the coating film or composition of the exemplary embodiment may be contained in the electromagnetic wave transmissive coating film formed of the electromagnetic wave transmissive coating material composition in an amount of 0.1 to 20% by weight, and preferably in an amount of 5 to 15% by weight.

The solvent used in the composition of the exemplary embodiment is not particularly restricted as long as the solvent is compatible with the resin component, and examples thereof include polar organic solvents such as alcohols, ethers, ketones, or esters. As the solvent, a solvent to each of the coating methods may be used preferably. These solvents may be used singularly or in a combination of two or more kinds thereof.

The solvent may be alkylene glycol monoalkyl ethers represented by a formula (2):

R-(O-R')n-OH formula (2)

[in the formula, R represents an alkyl group, R' represents an alkylene group, and n represents an integer of 1 to 4]. n may be an integer of 1 to 3. The alkyl group may be a C₁₋₁₀ alkyl group of straight or branched chain, and examples thereof include a methyl group, an ethyl group, a 1-propyl group, a 2-propyl group, an n-butyl group, a sec-butyl group, a tert-butyl group, a 2-methyl propyl group, a pentyl group, and a hexyl group. Preferably, the alkyl group may be a C₁₋₆ alkyl group. The alkylene group may be a C₁₋₁₀ alkylene group of straight or branched chain, and examples thereof include a methylene group, an ethylene group, a propylene group, a butylene group, a pentylene group, and a hexylene group. Preferably, the alkylene group may be a C₁₋₆ alkylene group.

Examples of the alkylene glycol monoalkyl ethers include ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol dimethyl ether, triethylene glycol monoethyl ether, triethylene glycol monobutyl ether, propylene glycol monomethyl ether, propylene glycol monoethyl ether, propylene glycol monobutyl ether, dipropylene glycol methyl ether, dipropylene glycol monoethyl ether, dipropylene glycol monobutyl ether, tripropylene glycol monomethyl ether, tripropylene glycol monoethyl ether, and tripropylene glycol monobutyl ether. Among these, propylene glycol monoethyl ether is preferably cited. From the viewpoint of stability and the coating property of the coating material, the alkylene glycol monoalkyl ethers may be contained in an amount of 50% by weight or more, and preferably in an amount of 52 to 100% by weight in the solvent of 100% by weight.

When the solvent used in the composition of the exemplary embodiment contains two or more kinds of solvents, from the viewpoint of the coating property, a solvent that contains, together with the alkylene glycol monoalkyl ethers, a solvent of which surface tension at 25°C is 33 mN/m or more may be used.

Examples of the solvents of which surface tension at 25°C is 33 mN/m or more include propylene carbonate, γ-butyrolactone, and water. Furthermore, a solvent may have the surface tension at 25°C of 45 mN/m or more, and examples of such solvents include water. The solvent may be contained, from the viewpoint of stability and adhesiveness of liquid droplets during discharge, in a solvent of 100% by weight, in an amount of 5% by weight or less, preferably in an amount of 0.01 to 2% by weight, and more preferably in an amount of 0.01 to 0.5% by weight.

A content of the solvent used in the electromagnetic wave transmissive coating material composition of the exemplary embodiment may be controlled to the viscosity optimum for a method by which the electromagnetic wave transmissive coating material composition is coated. The content may be in an amount of 4 to 99% by weight in the composition without particular restriction.

The composition of the exemplary embodiment may appropriately contain, other than the above components, other additives such as a polyethylene wax that is a colloidal dispersion mainly made of a polyamide wax that is a lubrication dispersion of aliphatic amide or polyethylene oxide, an antisettling agent, a curing catalyst, a UV-absorbent, a light stabilizer, an antioxidant, a leveling agent, a surface conditioner such as silicone and organic polymer, an anti-sagging agent, a thickener, a defoaming agent, a lubricant, a crosslinkable polymer particles (microgel), as long as these do not damage advantages of the exemplary embodiment.

A total blending amount of the foregoing other additives is usually 5% by weight or less, and preferably 1% by weight or less relative to 100% by weight of the composition. Furthermore, the blending amount of the foregoing other additives may be usually 10% by weight or less, and preferably 3% by weight or less relative to 100% by weight of the electromagnetic wave transmissive coating film.

The method of manufacturing the electromagnetic wave transmissive coating material composition is not particularly restricted, and conventional methods can be used to manufacture. For example, a method where the resin component, the solvent, and other additives are added to the metal nano-particles dispersion obtained according to the above-mentioned method, followed by stirring can be used to manufacture.

According to the exemplary embodiment, the electromagnetic wave transmissive coating material composition is coated on a substrate, as required, followed by drying by heating and/or by irradiating an energy beam, thereby an electromagnetic wave transmissive coating film is formed. The method of coating the electromagnetic wave transmissive coating material composition is not particularly restricted. Examples thereof include methods that use coating machines such as a spray coater, a spin coater, a roll coater, a silk screen coater, and an ink-jet printer, a dip coater, and also an electrophoresis coater. Among the coating methods, a spray coating method, a spin coating method, and an ink-jet printing method can be preferably used. More preferably, because of being excellent in formation of thin and uniform coating film, a spray coating method can be used. Furthermore, the heating method is not particularly restricted. Examples of the heating units include a heating furnace such as a gas furnace, an electric furnace, and an IR furnace. The method of irradiating an energy beam is not particularly restricted. For example, induction heating (IH) due to electromagnetic wave, and irradiation treatment with near infrared rays or far infrared rays can be cited.

A coating amount of the electromagnetic wave transmissive coating material composition can be varied depending on the concentration of the metal nano-particles and the coating method, and can be arbitrarily set in conformity with usages. A dry film thickness of the electromagnetic wave transmissive coating film is, without particularly restricting, usually 0.01 to 1 µm, and preferably may be 0.02 to 0.3 µm.

In the exemplary embodiment, the coated substrate is not particularly restricted. Examples thereof include metals such as iron, aluminum, copper or alloys thereof; inorganic materials such as glass, cement, and concrete; plastic materials such as resins such as a polyethylene resin, a polypropylene resin, an ethylene-vinyl acetate copolymer resin, a polyamide resin, an acrylic resin, a vinylidene chloride resin, a polycarbonate resin, a polyurethane resin, and an epoxy resin, and various kinds of fiber reinforced plastics (FRPs); and natural or synthetic materials such as woods or fiber materials of paper or cloth. The coated substrate may be transparent. Examples of coated substrates include metals such as iron, aluminum, copper, or alloys thereof preferably.

The electromagnetic wave transmissive coating film of the exemplary embodiment can be applied as a coating film of automobile bodies and automobile parts having the electromagnetic wave transmittance. The electromagnetic wave transmissive coating material composition of the exemplary embodiment can be applied to coat automobile bodies and automobile parts having the electromagnetic wave transmittance. Examples of exterior parts of automobiles include a door handle, a side maul, a back panel, and a wheel cover, and examples of interior parts of automobiles include various kinds of switches and sensor covers.

In what follows, the invention will be more detailed with reference to examples. However, the invention is not restricted thereto.

### [Manufacture Example 1]

In a kolben for manufacture example of silver nano-particle dispersion, 26.55 g of DISPER BIG 190 (aqueous solution containing 40% of effective component, acid value: 0.178 mmol/g-solid: manufactured by BYK Japan K. K.), and 38.10 g of deionized water were sampled and stirred to dissolve. In a vessel different from the kolben, 220.0 g of silver (I) nitrate and 200.0 g of deionized water were sampled. This was stirred in a hot bath at 50°C to dissolve silver nitrate.

Further, in a separate vessel, 3.28 g of bismuth (III) nitrate penta hydrate and 202.57 g of 1 mol/L nitric acid aqueous solution were sampled. This was stirred in a hot bath at 50°C to dissolve bismuth (III) nitrate penta hydrate.

Both of the resulted silver nitrate aqueous solution and bismuth nitrate aqueous solution were added to the kolben under stirring, thereby a mixed solution of DISPER BIG 190, silver nitrate, and bismuth nitrate was obtained

The resulted mixed aqueous solution was heated in a hot bath to a temperature of 50°C. In the kolben, a mixed solution of 597.29 g of 2-dimethylaminoethanol and 179.19 g of deionized water was instantaneously added under stirring. The liquid was instantaneously tinged with brown, and a liquid temperature went up to 60°C. Thereafter, when a reaction is controlled so as to be 60°C, the liquid was tinged with blackish green. When the stirring was continued for 2 hr with the liquid temperature held at 60°C, a gray-colored silver/bismuth alloy nano-particles containing paste liquid was obtained.

Into a 1 L polyethylene bottle, the resulted paste liquid was transferred, and left in a thermostat at 60°C for 18 hr. Then, a ultrafiltration module AHP1010 (trade name, manufactured by Asahi Chemical Industry Co., Ltd., molecular weight cut off: 50,000, number of filters: 400 pieces), a magnet pump, and a 3-L Teflon (registered trade mark) cup having a tube connection port on the lower side were connected with a silicon tube, thereby a ultrafiltration device was assembled.

The former reaction liquid was transferred into a stainless cup, followed by further adding 2 L of ion-exchanged water, then the pump was operated to conduct ultrafiltration.

After about 40 minutes, at the point when a filtrate from the module became 0.5 L, 2 L of ethanol was added to the stainless cup.

This operation was repeated, thereafter, it was confirmed that the conductivity of the filtrate became 5 µS/cm or less, followed by enriching until an amount of mother liquid becomes 500 ml.

Subsequently, a ultrafiltration device made of a 500 ml stainless cup containing 500 ml of the mother liquid, a ultrafiltration module AHP0013 (trade name, manufactured by Asahi Chemical Industry Co., Ltd., molecular weight cut off: 50,000, number of filters: 100 pieces), a tube pump, and an aspirator was assembled. The previously obtained mother liquid was charged in the stainless cup, followed by enriching to make the solid content concentration higher.

At the point when the mother liquid became about 100 ml, the pump was stopped to end the enrichment, thereby a silver/bismuth alloy nano-particles containing dispersion was obtained.

An average particle size of the silver/bismuth alloy nano-particles in the solution was 40 nm. The average particle size is an average value of particle sizes obtained by arbitrarily selecting 10 alloy nano-particles from a photograph taken with a transmission electron microscope (trade name: JEM-2000, manufactured by JEOL Ltd.) and by measuring by use of a vernier caliper.

As the result of TG-DTA measurement, it was found that in the resulted dispersion, a content of metal was 30.0% by weight, a content of DISPER BIG 190 was 1.5% by weight, and a content of ethanol was 68.6% by weight.

Furthermore, a weight ratio of silver to bismuth of the alloy nano-particles was 99/1.

### [Manufacture Example 2]

Into a Kolben equipped with a stirrer for synthesis example of the coating film forming resin, a thermostat and a condenser tube, 40 parts by weight of propylene glycol monoethyl ether was charged, to which 100 parts by weight of a mixed monomer liquid containing 8.86 parts by weight of styrene, 8.27 parts by weight of ethylhexyl acrylate, 15.00 parts by weight of lauryl methacrylate, 34.80 parts by weight of 2-hydroxyethyl methacrylate, 3.07 parts by weight of methacrylic acid, and 30.00 parts by weight of acid phosphoxyhexa(oxypropylene) monomethacrylate (trade name: JAMP-100N, manufactured by Johoku Chemical Co., Ltd.), and 43 parts by weight of an initiator solution containing 3.0 parts by weight of tert-butyl peroctoate (Kayaester O), and 40 parts by weight of propylene glycol monoethyl ether were added dropwise at 115°C over 3 hours, followed by continuing stirring for 30 minutes. Thereafter, 20.3 parts by weight of an initiator solution containing 0.3 parts by weight of tert-butyl peroctoate (Kayaester O) and 20 parts by weight of propylene glycol monoethyl ether was added dropwise thereto over 1 hour, followed by further continuing stirring for 1.5 hours. The resulted coating film forming resin had an acid value of 0.178 mmol/g-solid, an acid value from carboxyl groups of 0.357 mmol/g-solid, an acid value from phosphoric acid groups of 1.533 mmol/g-solid, a hydroxyl value of 150, a number average molecular weight of 3,800 and a nonvolatile content of 49% by weight.

### [Example 1]

In an eggplant flask, 50 parts by weight of the metal nano-particle dispersion containing 30.0% by weight of metal and obtained according to Manufacture Example 1 of manufacture of the electromagnetic wave transmissive coating material and formation of the electromagnetic wave transmissive coating film by spin coat were charged, further 34.3 parts by weight of 1-butoxy-2-propanol and 43.75 parts by weight of 1-ethoxy-2-propanol were added thereto, followed by disposing on an evaporator to remove ethanol, thereby 93.75 parts by weight of the metal nano-particles dispersion from which ethanol was removed and in which 1-butoxy-2-propanol and 1-ethoxy-2-propanol were a dispersion medium were obtained.

Thereto, 0.465 parts by weight of the resin solution obtained according to Manufacture Example 2, 0.38 parts by weight of DISPER BIG 190 (aqueous solution containing 40% of effective component, manufactured by BYK Japan K. K.), 0.23 parts by weight of EPOCROS WS-300 (trade name, aqueous solution containing 10% of effective component, oxazoline groups: 7.7 mmol/g-solid: manufactured by Nippon Shokubai Co., Ltd.), and 0.09 parts by weight of BYK-330 (propylene glycol monomethyl ether acetate solution containing 51 % of effective component, manufactured by BYK Japan K. K.) were added. Further, thereto, 1-ethoxy-2-propanol was added so that a total weight of the coating material may be 150 parts by weight, followed by thoroughly stirring, thereby a coating material was obtained. A ratio of carboxyl groups/oxazoline groups was 1.37.

A metal concentration in the coating material was 10.0% by weight. A solid content concentration in the coating material was 10.8% by weight. A metal concentration in the solid content of the coating material was 92.6% by weight.

A colorless and transparent polycarbonate flat plate (50 mm long × 70 mm wide) as a substrate was set on a spin coat unit (unit name: ASS-302, manufactured by Able Co., Ltd.), after a surface of polycarbonate was degreased with ethanol, about 1 g of the resulted coating material was dropped on the substrate with a dropper, followed by rotating at 300 rpm for 30 seconds to spin coat. A coating film having metallic luster was obtained. Also when the resulted film was observed from a back surface, lustrous appearance having metallic luster was recognized. Furthermore, the adhesiveness was excellent.

### [Example 2]

Except that in place of a resin solution obtained according to Manufacture Example 2 of manufacture of the electromagnetic wave transmissive coating material and formation of the electromagnetic wave transmissive coating film by spin coat, 0.570 g of SOLSPERSE 32500 (trade name, butyl acetate solution containing 40% of effective component, acid value: 0, manufactured by Lubrizol Corporation) was used, in a manner similar to Example 1, a coating material was obtained. A ratio of carboxyl groups/oxazoline groups was 0.91.

A metal concentration in the coating material was 10.0% by weight. A solid content concentration in the coating material was 10.8% by weight. A metal concentration in the solid content of the coating material was 92.6% by weight.

Except that in place of the coating material obtained according to Example 1, the coating material obtained above was used, in a manner similar to Example 1, spin coat coating was conducted. The resulted film had pearly luster but did not have the metallic luster. However, upon viewing from a back surface, a lustrous appearance having the metallic luster was recognized. The adhesiveness was excellent.

### [Comparative Manufacture Example 1]

Except that in the kolben of a method of manufacturing silver particles, in place of DISPER BIG 190, 10.62 g of PolybdR-15HT (trade name, effective component: 100.0% by weight, acid value: 0, manufactured by Idemitsu Kosan Co., Ltd.) was used, in a manner similar to Manufacture Example 1, synthesis of paste containing silver/bismuth alloy nano-particles was tried. Although reduced silver/bismuth alloy did not stabilize in nano size, and micrometer scale silver/bismuth alloy particles were observed to precipitate, the ultrafiltration was conducted similarly to Example 1, thereby a silver/bismuth alloy particles dispersion was obtained. As the result of TG-DTA, it was found that a metal content was 30.0% by weight, a content of PolybdR-15HT was 1.4% by weight, and a content of ethanol was 68.6% by weight.

Furthermore, a weight ratio of silver to bismuth of the alloy nano-particles was 99/l.

### [Comparative Example 1]

Except that in place of the silver/bismuth alloy nano-particles dispersion obtained according to Manufacture Example 1 of manufacture of the coating material and manufacture of the coating film by spin coat, the silver/bismuth alloy particles dispersion obtained according to Comparative Manufacture Example 1 was used, in a manner similar to Example 1, a coating material was manufactured. A ratio of carboxyl groups/oxazoline groups was 0.61.

A metal concentration in the coating material was 10% by weight. A solid content concentration in the coating material was 10.5% by weight. A metal concentration in the solid content of the coating material was 95.5% by weight.

Except that in place of the coating material obtained according to Example 1, the coating material obtained above was used, in a manner similar to Example 1, spin coat coating was conducted. The resulted film did not have luster, that is, did not have the metallic appearance. Also upon viewing from a back surface, the metallic luster was not recognized. Further, as to the adhesiveness, slight peeling was found.

### [Comparative Manufacture Example 2]

In a 2 L kolben for synthesis of gold nano-particles dispersion, 6.15 g of DISPER BIG 191 (effective component: 95%, acid value: 0.535 mmol/g-solid: amine value: 0.357 mmol/g-solid, manufactured by BYK Japan K. K.), and 280.2 g of ethanol were added. The kolben was put in a water bath and stirred at 50°C until DISPER BIG 191 was dissolved. Therein, 30.0 g of chlorauric acid dissolved in 280.2 g of ethanol was added under stirring, followed by stirring at 50°C for 10 minutes. Then, upon adding 32.4 g of dimethylaminoethanol, the liquid instantaneously turned black, and the liquid temperature went up to 63°C. When the liquid was left as it is and the liquid temperature went down to 50°C, with the temperature keeping there, stirring was continued for 2 hr, thereby an ethanol solution of gold colloid taking on blackish violet was obtained.

Then, a ultrafiltration module ACP1010 (trade name, manufactured by Asahi Chemical Industry Co., Ltd., molecular weight cut off: 13,000, number of filters: 400 pieces), a magnet pump, and a 3-L stainless cup having a tube connection port on the lower side were connected with a silicon tube, thereby a ultrafiltration device was built up. The previous ethanol solution of gold colloid was transferred into the stainless cup, followed by further adding 2 L of ethanol, then the pump was operated to conduct ultrafiltration. After about 40 minutes, at the point when a filtrate from the module became 2 L, 2 L of ion-exchanged water was added to the stainless cup. Thereafter, it was confirmed that the conductivity of the filtrate became 30 µS/cm or less, followed by enriching until an amount of mother liquid became 500 ml.

Subsequently, a ultrafiltration device made of a 500 ml stainless cup, a ultrafiltration module AHP0013 (trade name, manufactured by Asahi Chemical Industry Co., Ltd., molecular weight cut off: 50,000, number of filters: 100 pieces), a tube pump, and an aspirator was assembled. The previously obtained mother liquid was charged in the stainless cup, followed by enriching to make the solid content concentration higher. At the point when the mother liquid became about 100 ml, the pump was stopped to end the enrichment, thereby a gold nano-particles ethanol dispersion having a solid content of 22.2% was obtained. An average particle size of the gold nano-particles in the solution, which was measured by electron microscope observation, was 30 nm.

As the result of TG-DTA measurement, it was found that in the resulted dispersion, a content of gold was 20.0% by weight, a content of DISPER BIG 191 was 2.2% by weight, and a content of ethanol was 77.8% by weight.

### [Comparative Example 2]

In an eggplant flask, 50.0 parts by weight of the gold nano-particle dispersion having a gold concentration of 20.0% by weight, which was obtained according to Comparative Manufacture Example 2 of manufacture of the coating material and formation of the coating film by spin coat were sampled, further 38.9 parts by weight of propoxy propanol were added thereto, followed by disposing an evaporator to remove ethanol, thereby 50.0 parts by weight of the coating material from which ethanol was removed and in which gold nano-particles are dispersed with propoxy propanol as a dispersing medium were obtained. A ratio of the carboxyl groups/oxazoline groups was ∞.

A gold concentration in the coating material was 10.0% by weight. A solid content concentration in the coating material was 11.1% by weight. A metal concentration in the solid content of the coating material was 90.0% by weight.

Except that in place of the coating material obtained according to Example 1, the coating material obtained above was used, in a manner similar to Example 1, spin coat coating was conducted. In the resulted film, lustrous appearance having golden metallic luster was recognized. Further, also when seen from a back surface, the lustrous appearance having golden metallic luster was recognized. Still further, the adhesiveness was poor to result in peeling.

### [Example 3]

Except that in place of a resin solution obtained according to Manufacture Example 2 of manufacture of the electromagnetic wave transmissive coating material and formation of the electromagnetic wave transmissive coating film by spin coat, 0.507 g of DISPER BIG 163 (trade name, mixed solution of xylene, methoxypropyl acetate, and butyl acetate containing 45% of effective component, acid value: 0, manufactured by BYK Japan K. K..) was used, in a manner similar to Example 1, a coating material was obtained. A ratio of carboxyl groups/oxazoline groups was 0.91.

A metal concentration in the coating material was 10.0% by weight. A solid content concentration in the coating material was 10.8% by weight. A metal concentration in the solid content of the coating material was 92.6% by weight.

Except that in place of the coating material obtained according to Example 1, the coating material obtained above was used, in a manner similar to Example 1, spin coat coating was conducted. The resulted film had metallic luster having whitish dim feeling. However, upon viewing from a back surface, a lustrous appearance having the metallic luster was recognized. The adhesiveness was excellent.

### [Example 4]

Except that in place of the resin solution obtained according to Manufacture Example 2 of manufacture of the electromagnetic wave transmissive coating material and formation of the electromagnetic wave transmissive coating film by spin coat, 0.380 g of DISPER BIG 164 (trade name, butyl acetate solution containing 60% of effective component, acid value: 0, manufactured by BYK Japan K. K..) was used, in a manner similar to Example 1, a coating material was obtained. A ratio of carboxyl groups/oxazoline groups was 0.91.

A metal concentration in the coating material was 10.0% by weight. A solid content concentration in the coating material was 10.8% by weight. A metal concentration in the solid content of the coating material was 92.6% by weight.

Except that in place of the coating material obtained according to Example 1, the coating material obtained above was used, in a manner similar to Example 1, spin coat coating was conducted. The resulted film had metallic luster having whitish dim feeling. However, upon viewing from a back surface, a lustrous appearance having the metallic luster was recognized. The adhesiveness was excellent.

### [Comparative Manufacture Example 3]

In a 5 L kolben for manufacture of ethanol solution of silver/palladium composite colloid, 55.14 g of DISPER BIG 190 (aqueous solution containing 40% of effective component, acid value: 0.178 mmol/g-solid, manufactured by BYK Japan K. K.), and 1000.0 g of ion exchanged water were added and stirred. Therein, 39.12 g of an aqueous solution of palladium chloride (aqueous solution having a palladium concentration of 15.2%, manufactured by Tanaka Kikinzoku Kogyo K. K.) and 1000.0 g of ion exchanged water were added and stirred. Further, in the kolben, 820.5 g of 2-dimethylaminoethanol was added and stirred, thereby a pale yellow mixed solution was obtained. This was heated under stirring in a hot bath until the liquid temperature became 75°C.

In a separate vessel, 303.2 g of silver nitrate and 750.0 g of ion-exchanged water were charged, followed by stirring under heating at 50°C in a separate hot bath, thereby silver nitrate was dissolved. While stirring the pale yellow mixed aqueous solution of which liquid temperature is 75°C, therein an aqueous solution of silver nitrate was instantaneously added. When the aqueous solution of silver nitrate was added, the liquid temperature went up to 85°C, and the liquid instantaneously turned brown. After 5 minutes, the liquid turned black. When the liquid temperature came down to 80°C, while keeping this 80°C temperature, stirring was continued for 4 hr, thereby an aqueous solution containing blackish brown silver/palladium composite colloid was obtained.

Then, with a ultrafiltration module AHP1010 (trade name, manufactured by Asahi Chemical Industry Co., Ltd., molecular weight cut off: 50,000, number of filters: 400 pieces), a magnet pump, and a 5-L stainless vessel having a tube connection port on the lower side thereof connected with a silicon tube, therewith ultrafiltration was conducted. The aqueous solution obtained according to the above-mentioned reaction and containing silver/palladium composite colloid was transferred into a fluoropolymer vessel and circulated by the magnet pump. It was confirmed that a filtrate was exhausted from a colorless and transparent aqueous solution that is inside of the ultrafiltration module and contains miscellaneous ions to the outside of the system. When in the course of the ultrafiltration, an amount of the mother liquid in the fluoropolymer vessel decreased to 1 L, 2 L of ion-exchanged water was added, the circulation by the magnet pump was further continued to continue the ultrafiltration. A similar operation was repeated once more.

When the amount of mother liquid in the stainless vessel decreased to 1 L, this time, 2 L of ethanol was added, similarly, the ultrafiltration was further continued. Also thereafter, the ultrafiltration with ethanol was repeated, at the point when it was confirmed that the conductivity of the filtrate became 5 µS/cm or less and an amount of mother liquid became 1 L, the ultrafiltration was stopped, thereby an ethanol solution of silver/palladium composite colloid was obtained.

Then, a ultrafiltration device made of a 1 L glass vessel, a ultrafiltration module AHP0013 (trade name, manufactured by Asahi Chemical Industry Co., Ltd., molecular weight cut off: 50,000, number of filters: 100 pieces), a tube pump, and an aspirator was assembled. Into the glass vessel, the ethanol solution of silver/palladium composite colloid obtained in advance was added so as not to overflow, circulation due to the tube pump was started, thereby enrichment due to the ultrafiltration was started. As the amount of mother liquid in the glass vessel decreases owing to progress of the ultrafiltration, all of the ethanol solution of the silver/palladium composite colloid obtained in the foregoing process was added into the glass vessel. At the point when the amount of mother liquid became 650 ml, the pump was stopped, thereby enrichment due to the ultrafiltration came to the end. As the result thereof, an ethanol solution of silver/palladium composite colloid of which solid content concentration is 31.85% by weight was obtained.

A TG-DTA measurement of the ethanol solution of silver/palladium composite colloid was conducted and a silver content in the solid content was found to be 94.2% by weight. That is, the composition of the ethanol solution of silver/palladium composite colloid was found to contain 30.0% by weight of silver, 1.85% by weight of resin component, and 68.15% by weight of ethanol.

Further, a composition ratio of silver/palladium composite colloid particle was silver/palladium = 97/3 (weight ratio).

### [Comparative Example 3]

100 g of the ethanol solution of silver/palladium composite colloid (solid content: 30%) obtained according to Comparative Manufacture Example 3, 9.25 g of an oxazoline group containing polymer (trade name: EPOCROS WS-500, solid content: 40.0% by weight, oxazoline groups: 4.5 mmol/g-solid, manufactured by Nippon Shokubai Co., Ltd.), and 190.75 g of isopropanol were mixed and a coating material was obtained. A ratio of carboxyl groups/oxazoline groups was 0.02. A weight ratio of resin components contained in the oxazoline group-containing polymer and in the ethanol solution of the silver/palladium composite colloid was 2/l.

A metal concentration in the coating material was 10% by weight. A solid content concentration in the coating material was 10.6% by weight. A metal concentration in the solid content of the coating material was 94.2% by weight.

Except that in place of the coating material obtained according to Example 1, the coating material obtained above was used, in a manner similar to Example 1, spin coat coating was conducted. The resulted coating film had dark metallic luster. Further, the adhesiveness was poor and slight peeling was found.

The electromagnetic wave transmittances of the coating films obtained according to Examples 1 to 4 and Comparative Examples 1 to 3 were measured according to a method below.

### <Measurement of electromagnetic wave transmittance>

A test piece of polycarbonate film substrate of 150 mm long × 150 mm wide × 3.5 mm thick was prepared. On the substrate, each of coating films the same as the coating films prepared according to Examples 1 to 4 and Comparative Examples 1 to 3 was formed.

Thereafter, as illustrated in FIG. 1, the electromagnetic wave transmission loss at 76 GHz that is an application frequency of an on-vehicle millimeter wave radar device was measured.

### <Evaluation of adhesiveness>

Of a test piece obtained by spin coating and burning on a glass substrate of 50 mm long × 50 mm wide × 1 mm thick, the cross-cut CELLOTAPE (registered trade mark) peeling test was applied. One hundred of grids of 1 mm square were prepared, the cellotape peeling test was conducted, and the number of grids that was not peeled was counted. Evaluation criteria are as follows. O: 100/100 (no peeling), Δ: 99/100 to 50/100 (50% or less of peeling), ×: 49/100 to 0/100 (peeling of 51% or more). The electromagnetic wave transmittances, appearances and adhesiveness of the coating films obtained according to Examples 1 to 4 and Comparative Examples 1 to 3 are summarized in Table 1.

**[Table 1]**

| | Example 1 | Example 2 | Example 3 | Example 4 | Comparative Example 1 | Comparative Example 2 | Comparative Example 3 |
|---|---|---|---|---|---|---|---|
| Second resin, Carboxyl group | O DISPER BIG 190 0.178 mmol/g-so lid Resin solution 0.357 mmol/g-so lid | O DISPER BIG 190 0.178 mmol/g-so lid | O DISPER BIG 190 0.178 mmol/g-solid | O DISPER BIG 190 0.178 mmol/g-so lid | O DISPER BIG 190 0.178 mmol/g-so lid | O DISPER BIG 191 0.535 mmol/g-so lid | O DISPER BIG 190 0.178 mmol/g-so lid |
| First resin, Oxazoline group | O EPOCROS WS-300 7.7 mmol/g-so lid | O EPOCROS WS-300 7.7 mmol/g-so lid | O EPOCRO S WS-300 7.7 mmol/g-solid | O EPOCROS WS-300 7.7 mmol/g-so lid | O EPOCROS WS-300 7.7 mmol/g-so lid | × Nothing | O EPOCROS WS-500 4.5 mmol/g mmol/g-so lid |
| Amount of added water X | - | × SOLSPER SE 32500 X=2.2 | × DISPER BIG 163 X=1.5 | × DISPER BIG 164 X=1.6 | × Poly bd R-15HT X=1.1 | - | - |
| Metal concentration in solid content in lustrous coating material | 92.6% | 92.6% | 92.6% | 92.6% | 95.5% | 90% | 94.2% |
| Carboxyl groups/oxazolin e groups (mol ratio) | 1.37 | 0.91 | 0.91 | 0.91 | 0.61 | ∞ | 0.02 |
| Electromagnetic wave transmission loss (dB) | O | O | O | O | O | O | O |
| | 0.9 | 0.8 | 0.6 | 0.7 | 0.8 | 0.6 | 0.8 |
| Appearance | ⊚ | O | O | O | Δ | ⊚ | Δ |
| Adhesiveness | O | O | O | O | Δ | × | Δ |

| | | | | | | | |
|---|---|---|---|---|---|---|---|
| Resin component: O Soluble in ethanol × Insoluble in ethanol Electromagnetic wave transmission loss: O The case of less than 2 dB Appearance: ⊚ Metallic luster O Metallic luster but dark Δ No metallic luster Adhesiveness: O No peeling Δ Peeling of 50% or less × Peeling of 51% or more | | | | | | | |

The coating material compositions of Examples 1 to 4 and Comparative Example 1 include DISPER BIG 190 as the second resin soluble in ethanol and EPOCROS WS-300 as the first resin soluble in ethanol.

The coating material composition of Example 1 further includes a solution of a resin that is a coating film forming resin containing carboxyl groups as the second resin soluble in ethanol, wherein in the resin component, carboxyl groups are contained in mole ratio of 1.37 times oxazoline groups. It is found that the coating film obtained from the coating material composition of Example 1 is excellent in the electromagnetic wave transmittance, appearance, and adhesiveness, and in particular in the appearance.

The coating material composition of Example 2 contains a resin component SOLSPERSE 32500 (X = 2.2) that is insoluble in ethanol but satisfies the formula (1), wherein the resin component contains carboxyl groups 0.91 times oxazoline groups by mole ratio. It is found that the coating film obtained from the coating material composition of Example 2 is found to be excellent in the electromagnetic wave transmittance, appearance, and adhesiveness.

The coating material composition of Example 3 contains a resin component DISPER BIG 163 (X = 1.5) that is insoluble in ethanol but satisfies the formula (1), wherein the resin component contains carboxyl groups 0.91 times oxazoline groups by mole ratio. It is found that the coating film obtained from the coating material composition of Example 3 is excellent in the electromagnetic wave transmittance, appearance, and adhesiveness.

The coating material composition of Example 4 contains a resin component DISPER BIG 164 (X = 1.6) that is insoluble in ethanol but satisfies the formula (1), wherein the resin component contains carboxyl groups 0.91 times oxazoline groups by mole ratio. It is found that the coating film obtained from the coating material composition of Example 4 is excellent in the electromagnetic wave transmittance, appearance, and adhesiveness.

The coating material composition of Comparative Example 1 contains a resin component PolybdR-15HT (X = 1.1) that is neither soluble in ethanol nor satisfies the formula (1). The coating film obtained from the coating material composition of Comparative Example 1 is found to be inferior to the coating films obtained from the coating material compositions of Examples 1 to 4 in appearance and adhesiveness. This is considered because PolybdR-15HT is made only of carbon and hydrogen except for hydroxyl groups at ends and low in polarity, and cannot secure the affinity with the metal nano-particles and the solvent.

The coating material composition of Comparative Example 2 does not contain the first resin that contains an oxazoline group. It is found that the coating film obtained from the coating material composition of Comparative Example 2 is inferior to the coating films obtained from the coating material compositions of Examples 1 to 4 in the adhesiveness in particular.

The coating material composition of Comparative Example 3 includes DISPER BIG 190 as the second resin soluble in ethanol, and EPOCROS WS-500 as the first resin soluble in ethanol, wherein in the resin component, carboxyl groups are contained 0.02 times the oxazoline groups by mole ratio. It is found that the coating film obtained from the coating material composition of Comparative Example 3 is inferior to the coating films obtained from the coating material compositions of Examples 1 to 4 in the appearance and adhesiveness in particular.

The electromagnetic wave transmissive coating material compositions and electromagnetic wave transmissive coating films, which have brilliance, of the Exemplary Embodiments and Examples can be applied to electromagnetic wave transmissive automobile bodies and automobile parts.

## Claims

1. A lustrous electromagnetic wave transmissive coating film comprising:
dispersed metal nano-particles containing one or more kinds of metals; and
a resin component that contains a first resin containing an oxazoline group and, a second resin containing a carboxyl group, in the resin component the carboxyl group derived from the second resin being present in a molar ratio of 0.7 to 50 times the oxazoline group derived from the first resin, wherein
the resin component is soluble in ethanol, or, when water is added to a diethylene glycol diethyl ether solution obtained by dissolving 0.5 g of the resin component in 10 ml of diethylene glycol diethyl ether, an addition amount of the water until the diethylene glycol diethyl ether solution becomes turbid is 1.5 ml or more.

2. The lustrous electromagnetic wave transmissive coating film according to claim 1, wherein the carboxyl group derived from the second resin of the resin component is present in a molar ratio of 0.7 to 1.5 times the oxazoline group derived from the first resin.

3. The lustrous electromagnetic wave transmissive coating film according to claim 1 or 2, wherein the addition amount of the water is 1.5 ml or more and 10 ml or less.

4. The lustrous electromagnetic wave transmissive coating film according to any one of claims 1 to 3, wherein the metal is silver or gold.

5. The lustrous electromagnetic wave transmissive coating film according to any one of claims 1 to 4, wherein the first resin contains 5 mmol/g-solid or more of the oxazoline group.

6. The lustrous electromagnetic wave transmissive coating film according to claim 3, wherein the first resin contains 5 mmol/g-solid or more and 10.3 mmol/g-solid or less of the oxazoline group.

7. A method of forming a lustrous electromagnetic wave transmissive coating film comprising:
coating a substrate with an electromagnetic wave transmissive coating material composition containing dispersed metal nano-particles containing one or more kinds of metals, a resin component, and a solvent, wherein
the resin component is soluble in ethanol, or, when water is added to a diethylene glycol diethyl ether solution obtained by dissolving 0.5 g of the resin component in 10 ml of diethylene glycol diethyl ether, an addition amount of the water until the diethylene glycol diethyl ether solution becomes turbid is 1.5 ml or more, and a first resin containing an oxazoline group and a second resin containing a carboxyl group are contained, in the resin component the carboxyl group derived from the second resin being present in a molar ratio of 0.7 to 50 times the oxazoline group derived from the first resin.

8. The method of forming a lustrous electromagnetic wave transmissive coating film according to claim 7, wherein, after the coating, drying by heating and/or energy beam irradiation is conducted.

9. The method of forming a lustrous electromagnetic wave transmissive coating film according to claim 7 or 8, wherein the substrate is a plastic material.

10. The method of forming a lustrous electromagnetic wave transmissive coating film according to any one of claims 7 to 9, wherein the substrate is transparent.

11. The method of forming a lustrous electromagnetic wave transmissive coating film according to any one of claims 7 to 10, wherein the coating is based on spin coat coating.

12. The method of forming a lustrous electromagnetic wave transmissive coating film according to any one of claims 7 to 10, wherein the coating is based on spray coating.

13. The method of forming a lustrous electromagnetic wave transmissive coating film according to any one of claims 7 to 10, wherein the coating is based on ink-jet printing.

14. An electromagnetic wave transmissive coating material composition for forming a lustrous electromagnetic wave transmissive coating film,
the composition comprising:
a solvent;
dispersed metal nano-particles containing one or more kinds of metals; and
a resin component that is soluble in ethanol, or, when water is added to a diethylene glycol diethyl ether solution obtained by dissolving 0.5 g of the resin component in 10 ml of diethylene glycol diethyl ether, an addition amount of the water until the diethylene glycol diethyl ether solution becomes turbid is 1.5 ml or more, wherein
the resin component includes a first resin containing an oxazoline group and a second resin containing a carboxyl group, in the resin component the carboxyl groups derived from the second resin being present in a molar ratio of 0.7 to 50 times oxazoline group derived from the first resin.

15. The electromagnetic wave transmissive coating material composition according to claim 14, wherein the metal is silver or gold.

16. The electromagnetic wave transmissive coating material composition according to claim 14 or 15, wherein the first resin contains 5 mmol/g-solid or more of oxazoline group.

17. The electromagnetic wave transmissive coating material composition according to any one of claims 14 to 16, wherein the solvent contains 50% by weight or more of alkylene glycol monoalkyl ethers represented by R-(O-R')n-OH, where R represents an alkyl group, R' represents an alkylene group and n represents an integer of 1 to 4.

18. The electromagnetic wave transmissive coating material composition according to any one of claims 14 to 17, wherein the solvent contains a solvent of which surface tension at 25°C is 33 mN/m or more in an amount of 5% by weight or less.

19. The electromagnetic wave transmissive coating material composition according to any one of claims 14 to 17, wherein the solvent contains a solvent of which surface tension at 25°C is 45 mN/m or more in an amount of 5% by weight or less.

## Patentansprüche

1. Für elektromagnetische Wellen durchlässiger glänzender Beschichtungsfilm, umfassend:
fein verteilte Metallnanoteilchen, die eine oder mehrere Metallart/en enthalten, und
eine Harzkomponente, die ein Oxazolingruppen-haltiges erstes Harz und ein Carboxylgruppen-haltiges zweites Harz enthält, wobei in der Harzkomponente die aus dem zweiten Harz abgeleitete Carboxylgruppe in einem 0,7- bis 50-mal größeren Molverhältnis vorhanden ist als die aus dem ersten Harz abgeleitete Oxazolingruppe, wobei
die Harzkomponente in Ethanol löslich ist oder, wenn Wasser zu einer durch Lösen von 0,5 g der Harzkomponente in 10 ml Diethylenglycoldiethylether erhaltenen Diethylenglycoldiethyletherlösung hinzugefügt wird, eine Zugabemenge des Wassers 1,5 ml oder mehr beträgt, bis die Diethylenglycoldiethyletherlösung trüb wird.

2. Für elektromagnetische Wellen durchlässiger glänzender Beschichtungsfilm nach Anspruch 1, wobei die aus dem zweiten Harz der Harzkomponente abgeleitete Carboxylgruppe in einem 0,7- bis 1,5-mal größeren Molverhältnis vorhanden ist als die aus dem ersten Harz abgeleitete Oxazolingruppe.

3. Für elektromagnetische Wellen durchlässiger glänzender Beschichtungsfilm nach Anspruch 1 oder 2, wobei die Zugabemenge des Wassers 1,5 ml oder mehr und 10 ml oder weniger beträgt.

4. Für elektromagnetische Wellen durchlässiger glänzender Beschichtungsfilm nach einem der Ansprüche 1 bis 3, wobei das Metall Silber oder Gold ist.

5. Für elektromagnetische Wellen durchlässiger glänzender Beschichtungsfilm nach einem der Ansprüche 1 bis 4, wobei das erste Harz 5 mmol/g Feststoff oder mehr von der Oxazolingruppe enthält.

6. Für elektromagnetische Wellen durchlässiger glänzender Beschichtungsfilm nach Anspruch 3, wobei das erste Harz 5 mmol/g Feststoff oder mehr und 10,3 mml/g Feststoff oder weniger von der Oxazolingruppe enthält.

7. Verfahren zum Ausbilden eines für elektromagnetische Wellen durchlässigen glänzenden Beschichtungsfilms, umfassend:
Beschichten eines Substrates mit einer für elektromagnetische Wellen durchlässigen Beschichtungsmaterialzusammensetzung, die fein verteilte Metallnanoteilchen, die eine oder mehrere Metallart/en enthält, eine Harzkomponente und ein Lösungsmittel enthält, wobei
die Harzkomponente in Ethanol löslich ist oder, wenn Wasser zu einer durch Lösen von 0,5 g der Harzkomponente in 10 ml Diethylenglycoldiethylether erhaltenen Diethylenglycoldiethyletherlösung hinzugefügt wird, eine Zugabemenge des Wassers 1,5 ml oder mehr beträgt, bis die Diethylenglycoldiethyletherlösung trüb wird, und ein Oxazolingruppen-haltiges erstes Harz und ein Carboxylgruppen-haltiges zweites Harz enthalten sind, wobei in der Harzkomponente die aus dem zweiten Harz abgeleitete Carboxylgruppe in einem 0,7- bis 50-mal größeren Molverhältnis vorhanden ist als die aus dem ersten Harz abgeleitete Oxazolingruppe.

8. Verfahren zum Ausbilden eines für elektromagnetische Wellen durchlässigen glänzenden Beschichtungsfilms nach Anspruch 7, wobei nach dem Beschichten Trocknen durch Wärme und/oder Energiebestrahlung ausgeführt wird.

9. Verfahren zum Ausbilden eines für elektromagnetische Wellen durchlässigen glänzenden Beschichtungsfilms nach Anspruch 7 oder 8, wobei das Substrat ein Kunststoffmaterial ist.

10. Verfahren zum Ausbilden eines für elektromagnetische Wellen durchlässigen glänzenden Beschichtungsfilms nach einem der Ansprüche 7 bis 9, wobei das Substrat transparent ist.

11. Verfahren zum Ausbilden eines für elektromagnetische Wellen durchlässigen glänzenden Beschichtungsfilms nach einem der Ansprüche 7 bis 10, wobei die Beschichtung auf einer Rotationsbeschichtung basiert.

12. Verfahren zum Ausbilden eines für elektromagnetische Wellen durchlässigen glänzenden Beschichtungsfilms nach einem der Ansprüche 7 bis 10, wobei die Beschichtung auf einer Spraybeschichtung basiert.

13. Verfahren zum Ausbilden eines für elektromagnetische Wellen durchlässigen glänzenden Beschichtungsfilms nach einem der Ansprüche 7 bis 10, wobei die Beschichtung auf Tintenstrahldruck basiert.

14. Für elektromagnetische Wellen durchlässige Beschichtungsmaterialzusammensetzung zum Ausbilden eines für elektromagnetische Wellen durchlässigen glänzenden Beschichtungsfilms,
wobei die Zusammensetzung umfasst:
ein Lösungsmittel,
fein verteilte Metallnanoteilchen, die eine oder mehrere Metallart/en enthalten, und
eine Harzkomponente, die in Ethanol löslich ist oder bei der, wenn Wasser zu einer durch Lösen von 0,5 g der Harzkomponente in 10 ml Diethylenglycoldiethylether erhaltenen Diethylenglycoldiethyletherlösung hinzugefügt wird, eine Zugabemenge des Wassers 1,5 ml oder mehr beträgt, bis die Diethylenglycoldiethyletherlösung trüb wird, wobei
die Harzkomponente ein Oxazolingruppen-haltiges erstes Harz und ein Carboxylgruppen-haltiges zweites Harz enthält, wobei in der Harzkomponente die aus dem zweiten Harz abgeleitete Carboxylgruppe in einem 0,7- bis 50-mal größeren Molverhältnis vorhanden ist als die aus dem ersten Harz abgeleitete Oxazolingruppe.

15. Für elektromagnetische Wellen durchlässige Beschichtungsmaterialzusammensetzung nach Anspruch 14, wobei das Metall Silber oder Gold ist.

16. Für elektromagnetische Wellen durchlässige Beschichtungsmaterialzusammensetzung nach Anspruch 14 oder 15, wobei das erste Harz 5 mmol/g Feststoff oder mehr von der Oxazolingruppe enthält.

17. Für elektromagnetische Wellen durchlässige Beschichtungsmaterialzusammensetzung nach einem der Ansprüche 14 bis 16, wobei das Lösungsmittel 50 Gewichts-% oder mehr eines Alkylenglycolmonoalkylethers enthält, der durch R-(O-R')n-OH dargestellt ist, wobei R eine Akylgruppe darstellt, R' eine Alkylengruppe darstellt und n eine ganze Zahl von 1 bis 4 darstellt.

18. Für elektromagnetische Wellen durchlässige Beschichtungsmaterialzusammensetzung nach einem der Ansprüche 14 bis 17, wobei das Lösungsmittel ein Lösungsmittel, das bei 25°C eine Oberflächenspannung von 33 mN/m oder mehr aufweist, in einer Menge von 5 Gewichts-% oder weniger enthält.

19. Für elektromagnetische Wellen durchlässige Beschichtungsmaterialzusammensetzung nach einem der Ansprüche 14 bis 17, wobei das Lösungsmittel ein Lösungsmittel, das bei 25°C eine Oberflächenspannung von 45 mN/m oder mehr aufweist, in einer Menge von 5 Gewichts-% oder weniger enthält.

## Revendications

1. Film de revêtement brillant transmettant les ondes électromagnétiques comprenant :
des nanoparticules métalliques dispersées contenant un ou plusieurs types de métaux ; et
un composant résine qui contient une première résine contenant un groupe oxazoline et une seconde résine contenant un groupe carboxyle, dans le composant résine le groupe carboxyle dérivé de la seconde résine étant présent dans un rapport molaire de 0,7 à 50 fois le groupe oxazoline dérivé de la première résine, où
le composant résine est soluble dans l'éthanol ou bien, quand de l'eau est ajoutée à une solution dans le diéthyléther de diéthylèneglycol obtenue par dissolution de 0,5 mg du composant résine dans 10 ml de diéthyléther de diéthylèneglycol, une quantité d'addition de l'eau jusqu'à ce que la solution dans le diéthyléther de diéthylèneglycol devienne trouble est 1,5 ml ou plus.

2. Film de revêtement brillant transmettant les ondes électro-magnétiques selon la revendication 1, où le groupe carboxyle dérivé de la seconde résine du composant résine est présent dans un rapport molaire de 0,7 à 1,5 fois le groupe oxazoline dérivé de la première résine.

3. Film de revêtement brillant transmettant les ondes électromagnétiques selon la revendication 1 ou 2, où la quantité d'addition de l'eau est 1,5 ml ou plus et 10 ml ou moins.

4. Film de revêtement brillant transmettant les ondes électromagnétiques selon l'une quelconque des revendications 1 à 3, où le métal est l'argent ou l'or.

5. Film de revêtement brillant transmettant les ondes électro-magnétiques selon l'une quelconque des revendications 1 à 4, où la première résine contient 5 mmol/g de solide ou plus du groupe oxazoline.

6. Film de revêtement brillant transmettant les ondes électro-magnétiques selon la revendication 3, où la première résine contient 5 mmol/g de solide ou plus et 10,3 mmol/g de solide ou moins du groupe oxazoline.

7. Procédé de formation d'un film de revêtement brillant transmettant les ondes électromagnétiques comprenant :
le revêtement d'un substrat avec une composition de matériau de revêtement transmettant les ondes électromagnétiques contenant des nanoparticules métalliques dispersées contenant un ou plusieurs types de métaux, un composant résine et un solvant, où
le composant résine est soluble dans l'éthanol ou bien, quand de l'eau est ajoutée à une solution dans le diéthyléther de diéthylèneglycol obtenue par dissolution de 0,5 g de composant résine dans 10 ml de diéthyléther de diéthylèneglycol, une quantité d'addition de l'eau jusqu'à ce que la solution dans le diéthyléther de diéthylèneglycol devienne trouble est 1,5 ml ou plus, et une première résine contenant un groupe oxazoline et une seconde résine contenant un groupe carboxyle sont contenues, dans le composant résine le groupe carboxyle dérivé de la seconde résine étant présent dans un rapport molaire de 0,7 à 50 fois le groupe oxazoline dérivé de la première résine.

8. Procédé de formation d'un film de revêtement brillant transmettant les ondes électromagnétiques selon la revendication 7 où, après le revêtement, un séchage par chauffage et/ou irradiation avec un faisceau d'énergie est réalisé.

9. Procédé de formation d'un film de revêtement brillant transmettant les ondes électromagnétiques selon la revendication 7 ou 8, où le substrat est une matière plastique.

10. Procédé de formation d'un film de revêtement brillant transmettant les ondes électromagnétiques selon l'une quelconque des revendications 7 à 9, où le substrat est transparent.

11. Procédé de formation d'un film de revêtement brillant transmettant les ondes électromagnétiques selon l'une quelconque des revendications 7 à 10, où le revêtement est basé sur un revêtement par dépôt à la tournette.

12. Procédé de formation d'un film de revêtement brillant transmettant les ondes électromagnétiques selon l'une quelconque des revendications 7 à 10, où le revêtement est basé sur un revêtement par pulvérisation.

13. Procédé de formation d'un film de revêtement brillant transmettant les ondes électromagnétiques selon l'une quelconque des revendications 7 à 10, où le revêtement est basé sur une impression par jet d'encre.

14. Composition de matériau de revêtement transmettant les ondes électromagnétiques pour former un film de revêtement brillant transmettant les ondes électromagnétiques,
la composition comprenant :
un solvant ;
des nanoparticules métalliques dispersées contenant un ou plusieurs types de métaux ; et
un composant résine qui est soluble dans l'éthanol, ou bien, quand de l'eau est ajoutée à une solution dans le diéthyléther de diéthylèneglycol obtenue par dissolution de 0,5 g du composant résine dans 10 ml de diéthyléther de diéthylèneglycol, une quantité d'addition de l'eau jusqu'à ce que la solution dans le diéthyléther de diéthylèneglycol devienne trouble est 1,5 ml ou plus,
où
le composant résine inclut une première résine contenant un groupe oxazoline et une seconde résine contenant un groupe carboxyle, dans le composant résine les groupes carboxyle dérivés de la seconde résine étant présents dans un rapport molaire de 0,7 à 50 fois le groupe oxazoline dérivé de la première résine.

15. Composition de matériau de revêtement transmettant les ondes électromagnétiques selon la revendication 14, où le métal est l'argent ou l'or.

16. Composition de matériau de revêtement transmettant les ondes électromagnétiques selon la revendication 14 ou 15, où la première résine contient 5 mmol/g de solide ou plus de groupe oxazoline.

17. Composition de matériau de revêtement transmettant les ondes électromagnétiques selon l'une quelconque des revendications 14 à 16, où le solvant contient 50 % en poids ou plus de monoalkyléthers d'alkylèneglycol représentés par R-(O-R')n-OH, où R représente un groupe alkyle, R' représente un groupe alkylène et n représente un entier de 1 à 4.

18. Composition de matériau de revêtement transmettant les ondes électromagnétiques selon l'une quelconque des revendications 14 à 17, où le solvant contient un solvant dont la tension superficielle à 25°C est 33 mN/m ou plus en une quantité de 5 % en poids ou moins.

19. Composition de matériau de revêtement transmettant les ondes électromagnétiques selon l'une quelconque des revendications 14 à 17, où le solvant contient un solvant dont la tension superficielle à 25°C est 45 mN/m ou plus en une quantité de 5 % en poids ou moins.
